(19) Europäisches Patentamt
European Patent Office
Office européen des brevets

(11) EP 1 365 650 B1

(12) EUROPÄISCHE PATENTSCHRIFT

(45) Veröffentlichungstag und Bekanntmachung des Hinweises auf die Patenterteilung:
**24.08.2005 Patentblatt 2005/34**

(21) Anmeldenummer: **02729924.7**

(22) Anmeldetag: **17.01.2002**

(51) Int Cl.[7]: **A01N 35/04**, A01N 37/52, A01N 43/10, A01N 43/56, A01N 43/36, A01N 43/50, A01N 43/78, A01N 43/08, A01N 43/58, A01N 43/54

(86) Internationale Anmeldenummer:
**PCT/EP2002/000414**

(87) Internationale Veröffentlichungsnummer:
**WO 2002/062140 (15.08.2002 Gazette 2002/33)**

(54) **FUNGIZIDE ZUSAMMENSETZUNGEN ENTHALTEND EIN BENZOPHENON UND EIN OXIMETHERDERIVAT**

FUNGICIDAL COMPOSITIONS CONTAINING A BENZOPHENONE AND AN OXIME ETHER DERIVATIVE

COMPOSITIONS FONGICIDES CONTENANT UN DERIVE DE LA BENZOPHENONE ET UN DERIVE D'ETHER D'OXIME

(84) Benannte Vertragsstaaten:
**AT BE CH CY DE DK ES FI FR GB GR IE IT LI LU MC NL PT SE TR**
Benannte Erstreckungsstaaten:
**RO**

(30) Priorität: **18.01.2001 DE 10102281**

(43) Veröffentlichungstag der Anmeldung:
**03.12.2003 Patentblatt 2003/49**

(73) Patentinhaber: **BASF Aktiengesellschaft**
**67056 Ludwigshafen (DE)**

(72) Erfinder:
- **EICKEN, Karl**
**67157 Wachenheim (DE)**
- **ROSE, Ingo**
**68159 Mannheim (DE)**
- **AMMERMANN, Eberhard**
**64646 Heppenheim (DE)**
- **STIERL, Reinhard**
**67112 Mutterstadt (DE)**
- **LORENZ, Gisela**
**67434 Hambach (DE)**
- **STRATHMANN, Siegfried**
**67117 Limburgerhof (DE)**
- **SCHERER, Maria**
**76829 Landau-Godramstein (DE)**
- **SCHELBERGER, Klaus**
**67161 Gönnheim (DE)**
- **HADEN, Egon**
**67259 Kleinniedesheim (DE)**

(56) Entgegenhaltungen:
**EP-A- 0 919 126**
**EP-A- 1 023 834**
**WO-A-00/72678**
**DE-A- 19 722 223**

EP 1 365 650 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft fungizide Mischungen, enthaltend

a) Benzophenone der Formel I,

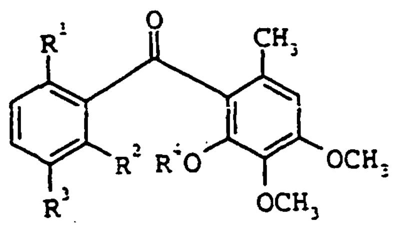

I

in der

$R^1$ für Chlor, Methyl, Methoxy, Acetoxy, Pivaloyloxy oder Hydroxy;

$R^2$ für Chlor oder Methyl;

$R^3$ für Wasserstoff, Halogen oder Methyl; und

$R^4$ für $C_1$-$C_6$-Alkyl oder Benzyl stehen, wobei der Phenylteil des Benzylrestes einen Halogen oder Methylsubstituenten tragen kann, und

b) Oximetherderivate der Formel II

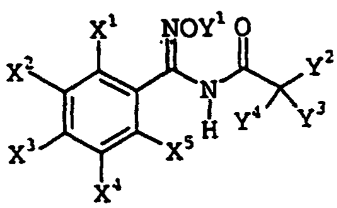

II

wobei die Substituenten $X^1$ bis $X^5$ und $Y^1$ bis $Y^4$ folgende Bedeutung haben:

$X^1$ Halogen, $C_1$-$C_4$-Halogenalkyl $C_1$-$C_4$-Halogenalkoxy;

$X^2$ bis $X^5$ unabhängig voneinander Wasserstoff, Halogen, $C_1$-$C_4$-Alkyl, $C_1$-$C_4$-Halogenalkyl, $C_1$-$C_4$-Alkoxy oder $C_1$-$C_4$-Halogenalkoxy;

$Y^1$ $C_1$-$C_4$-Alkyl, $C_2$-$C_6$-Alkenyl, $C_2$-$C_6$-Alkinyl, $C_1$-$C_4$-Alkyl-$C_3$-$C_7$-cycloalkyl, wobei diese Reste Substituenten ausgewählt aus der Gruppe Halogen, Cyano, und $C_1$-$C_4$-Alkoxy tragen können;

$Y^2$ einen Phenylrest oder einen 5- oder 6-gliedrigen gesättigten oder ungesättigten Heterocyclylrest mit mindestens einem Heteroatom ausgewählt aus der Gruppe N, O und S, wobei die cyclischen Reste einen bis drei Substituenten ausgewählt aus der Gruppe aus Halogen, $C_1$-$C_4$-Alkyl, $C_1$-$C_4$-Alkoxy, $C_1$-$C_4$-Halogenalkyl, $C_1$-$C_4$-Halogenalkoxy, $C_1$-$C_4$-Alkoxy-$C_2$-$C_4$-alkenyl, $C_1$-$C_4$-Alkoxy-$C_2$-$C_4$-alkinyl aufweisen können; und

$Y^3$, $Y^4$ unabhängig voneinander Wasserstoff, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy;

in einer synergistisch wirksamen Menge.

Außerdem betrifft die Erfindung Verfahren zur Bekämpfung von Schadpilzen mit Mischungen der Verbindungen I und II und die Verbindungen I und II enthaltende Mittel.

Die Verbindungen der Formel I, ihre Herstellung und ihre Wirkung gegen Schadpilze sind aus der Literatur bekannt (EP-A 727 141; EP-A 897 904; EP-A 899 255; EP-A 967 196).

Mischungen von Benzophenonen der Formel I mit anderen fungiziden Wirkstoffen sind aus EP-A 1 023 834 bekannt.

Die Verbindungen der Formel II sowie Verfahren zu deren Herstellung sind in WO-A 96/19442, EP-A 1 017 670 und EP-A 1 017 671 beschrieben.

In DE-A 197 22 223 werden Mischungen aus Verbindungen der Formel II und Wirkstoffen aus der Klasse der Strobilurine beschrieben.

Der vorliegenden Erfindung lag die Aufgabe zugrunde, weitere besonders wirksame Mischungen zur Bekämpfung von Schadpilzen und insbesondere für bestimmte Indikationen zur Verfügung zu stellen.

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierte Mischungen gefunden. Es wurde außerdem gefunden, daß sich bei gleichzeitiger, und zwar gemeinsamer oder getrennter Anwendung der Verbindungen I und der Verbindungen II oder bei Anwendung der Verbindungen I und der Verbindungen II nacheinander Schadpilze besser bekämpfen lassen, als mit den Einzelverbindungen allein.

Die erfindungsgemäßen Mischungen wirken synergistisch und sind daher zur Bekämpfung von Schadpilzen und insbesondere von echten Mehltaupilzen in Getreide, Gemüse, Obst, Zierpflanzen und Reben besonders geeignet.

Die folgenden Verbindungen der Formel I sind als Mischungspartner bevorzugt, wobei die einzelnen Bevorzugungen für sich allein genommen und in Kombination zu lesen sind.

Bevorzugt sind Verbindungen I, in denen $R^1$ für Chlor, Methoxy, Acetoxy oder Hydroxy steht und insbesondere bevorzugt sind Verbindungen, in denen $R^1$ Methoxy, Acetoxy oder Hydroxy bedeutet. Ganz besonders bevorzugt sind Verbindungen, in denen $R^1$ Methoxybedeutet.

Erfindungsgemäß sind Mischungen enthaltend Verbindungen I, in denen $R^2$ Chlor oder Methyl bedeutet. Bevorzugt sind Verbindungen I, in denen $R^2$ Methyl bedeutet.

Außerdem sind Verbindungen I bevorzugt, in denen $R^3$ für Wasserstoff, Methyl, Chlor oder Brom und insbesondere bevorzugt für Wasserstoff, Chlor oder Brom steht.

Daneben sind Verbindungen I bevorzugt, in denen $R^4$ für $C_1$-$C_4$-Alkyl oder Benzyl stehen, wobei der Phenylteil des Benzylrestes einen Halogen oder Methylsubstituenten tragen kann. Insbesondere bevorzugt sind Verbindungen der Formel I, in der $R^4$ für $C_1$-$C_4$-Alkyl und vorzugsweise Methyl steht.

Weiterhin bevorzugt sind Verbindungen der Formel I, in der die Substituenten $R^1$, $R^2$, $R^3$ und $R^4$ die folgende Bedeutung haben:

$R^1$ Methoxy, Acetoxy oder Hydroxy;
$R^2$ Methyl;
$R^3$ Wasserstoff, Chlor oder Brom; und
$R^4$ $C_1$-$C_4$-Alkyl.

Daneben sind Verbindung der Formel I besonders bevorzugt, in denen die Substituenten die in der folgenden Tabelle 1 gegebenen Bedeutungen haben:

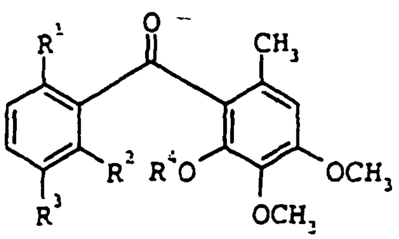

I

| Nr. | $R^1$ | $R^2$ | $R^3$ | $R^4$ |
|---|---|---|---|---|
| I-1 | Methoxy | Cl | H | Methyl |

(fortgesetzt)

| Nr. | $R^1$ | $R^2$ | $R^3$ | $R^4$ |
|---|---|---|---|---|
| I-2 | Methoxy | Cl | Methyl | Methyl |
| I-3 | Methoxy | Cl | H | n-Propyl |
| I-4 | Methoxy | Cl | H | n-Butyl |
| I-5 | Methoxy | Cl | H | Benzyl |
| I-6 | Methoxy | Cl | H | 2-Fluorobenzyl |
| I-7 | Methoxy | Cl | H | 3-Fluorobenzyl |
| I-8 | Methoxy | Cl | H | 4-Fluorophenyl |
| I-9 | Methoxy | Cl | H | 2-Methylphenyl |
| I-10 | Methoxy | Cl | H | 3-Methylphenyl |
| I-11 | Methoxy | Cl | H | 4-Methylphenyl |
| I-12 | Methoxy | Cl | Br | Methyl |
| I-13 | Methoxy | Cl | Br | n-Propyl |
| I-14 | Methoxy | Cl | Br | n-Butyl |
| I-15 | Methoxy | Cl | Br | Benzyl |
| I-16 | Methoxy | Cl | Br | 2-Fluorobenzyl |
| I-17 | Methoxy | Methyl | H | Methyl |
| I-18 | Methoxy | Methyl | Cl | Methyl |
| I-19 | Methoxy | Methyl | H | n-Propyl |
| I-20 | Methoxy | Methyl | H | n-Butyl |
| I-21 | Methoxy | Methyl | H | Benzyl |
| I-22 | Methoxy | Methyl | H | 2-Fluorobenzyl |
| I-23 | Methoxy | Methyl | H | 3-Fluorobenzyl |
| I-24 | Methoxy | Methyl | H | 4-Fluorophenyl |
| I-25 | Methoxy | Methyl | H | 2-Methylphenyl |
| I-26 | Methoxy | Methyl | H | 3-Methylphenyl |
| I-27 | Methoxy | Methyl | H | 4-Methylphenyl |
| I-28 | Methoxy | Methyl | Br | Methyl |
| I-29 | Methoxy | Methyl | Br | n-Propyl |
| I-30 | Methoxy | Methyl | Br | n-Butyl |
| I-31 | Methoxy | Methyl | Br | Benzyl |
| I-32 | Methoxy | Methyl | Br | 2-Fluorobenzyl |
| I-33 | Acetoxy | Methyl | H | Methyl |
| I-34 | Acetoxy | Methyl | Cl | Methyl |
| I-35 | Acetoxy | Methyl | Br | Methyl |
| I-36 | Hydroxy | Methyl | H | Methyl |
| I-37 | Hydroxy | Methyl | Cl | Methyl |
| I-38 | Hydroxy | Methyl | Br | Methyl |
| I-39 | Pivaloyloxy | Methyl | H | Methyl |

(fortgesetzt)

| Nr. | $R^1$ | $R^2$ | $R^3$ | $R^4$ |
|---|---|---|---|---|
| I-40 | Pivaloyloxy | Methyl | Cl | Methyl |
| I-41 | Pivaloyloxy | Methyl | Br | Methyl |
| I-42 | Cl | Cl | H | Methyl |
| I-43 | Cl | Cl | H | n-Propyl |
| I-44 | Cl | Cl | H | n-Butyl |
| I-45 | Cl | Cl | H | Benzyl |
| I-46 | Cl | Cl | H | 2-Fluorobenzyl |
| I-47 | Cl | Cl | H | 3-Fluorobenzyl |
| I-48 | Cl | Cl | H | 4-Fluorophenyl |
| I-49 | Cl | Cl | H | 2-Methylphenyl |
| I-50 | Cl | Cl | H | 3-Methylphenyl |
| I-51 | Cl | Cl | H | 4-Methylphenyl |
| I-52 | Cl | Cl | Br | Methyl |
| I-53 | Cl | Cl | Br | n-Propyl |
| I-54 | Cl | Cl | Br | n-Butyl |
| I-55 | Cl | Cl | Br | Benzyl |
| I-56 | Cl | Cl | Br | 2-Fluorobenzyl |
| I-57 | Methyl | Methyl | H | Methyl |
| I-58 | Methyl | Methyl | H | n-Propyl |
| I-59 | Methyl | Methyl | H | n-Butyl |
| I-60 | Methyl | Methyl | H | Benzyl |
| I-61 | Methyl | Methyl | H | 2-Fluorobenzyl |
| I-62 | Methyl | Methyl | H | 3-Fluorobenzyl |
| I-63 | Methyl | Methyl | H | 4-Fluorophenyl |
| I-64 | Methyl | Methyl | H | 2-Methylphenyl |
| I-65 | Methyl | Methyl | H | 3-Methylphenyl |
| I-66 | Methyl | Methyl | H | 4-Methylphenyl |
| I-67 | Methyl | Methyl | Br | Methyl |
| I-68 | Methyl | Methyl | Br | n-Propyl |
| I-69 | Methyl | Methyl | Br | n-Butyl |
| I-70 | Methyl | Methyl | Br | Benzyl |
| I-71 | Methyl | Methyl | Br | 2-Fluorobenzyl |

Als Mischungkomponente b) dienen die Oximetherderivate der Formel II

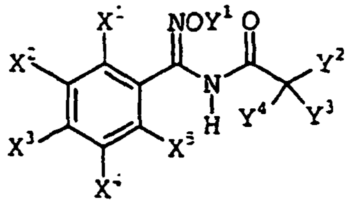

II

wobei die Substituenten $X^1$ bis $X^5$ und $Y^1$ bis $Y^4$ folgende Be-, deutung haben:

| | |
|---|---|
| $X^1$ | Halogen, $C_1$-$C_4$-Halogenalkyl $C_1$-$C_4$-Halogenalkoxy; |
| $X^2$ bis $X^5$ | unabhängig voneinander Wasserstoff, Halogen, $C_1$-$C_4$-Alkyl, $C_1$-$C_4$-Halogenalkyl, $C_1$-$C_4$-Alkoxy oder $C_1$-$C_4$-Halogenalkoxy; |
| $Y^1$ | $C_1$-$C_4$-Alkyl, $C_2$-$C_6$-Alkenyl, $C_2$-$C_6$-Alkinyl, $C_1$-$C_4$-Alkyl-$C_3$-$C_7$-cycloalkyl, wobei diese Reste Substituenten ausgewählt aus der Gruppe Halogen, Cyano, und $C_1$-$C_4$-Alkoxy tragen können; |
| $Y^2$ | einen Phenylrest oder einen 5- oder 6-gliedrigen gesättigten oder ungesättigten Heterocyclylrest mit mindestens einem Heteroatom ausgewählt aus der Gruppe N, O und S, wobei die cyclischen Reste einen bis drei Substituenten ausgewählt aus der Gruppe aus Halogen, $C_1$-$C_4$-Alkyl, $C_1$-$C_4$-Alkoxy, $C_1$-$C_4$-Halogenalkyl, $C_1$-$C_4$-Halogenalkoxy, $C_1$-$C_4$-Alkoxy-$C_2$-$C_4$-alkenyl, $C_1$-$C_4$-Alkoxy-$C_2$-$C_4$-alkinyl aufweisen können; und |
| $Y^3$, $Y^4$ | unabhängig voneinander Wasserstoff, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy. |

Unter den Verbindungen II sind solche bevorzugt, bei denen

| | |
|---|---|
| $X^1$ | Chlor, Difluormethoxy oder Trifluormethyl; |
| $X^2$ und $X^3$ | Wasserstoff; |
| $X^4$ | Wasserstoff oder Fluor; |
| $X^5$ | Chlor, Fluor, Trifluormethyl oder Difluormethoxy; |
| $Y^1$ | Methylencyclopropyl; |
| $Y^2$ | ggf. substituiertes Phenyl, Thienyl, Pyrazolyl, Pyrrolyl, Imidazolyl, Thiazolyl, Furyl, Pyridazinyl und Pyrimidinyl. Bevorzugte Substituenten an diesen Ringsystemen sind Halogen (insbesondere F und Cl), $C_1$-$C_4$-Alkoxy (insbesondere Methoxy) und $C_1$-$C_4$-Alkyl (insbesondere Methyl). Die Zahl der Ringsubstituenten kann 1 bis 3, insbesondere 1 bis 2 betragen. Unsubstituiertes Phenyl oder in 4-Stellung durch Fluor, Methyl, Trifluormethyl oder Methoxy substituiertes Phenyl sind besonders bevorzugt; |
| $Y^3$ und $Y^4$ | Wasserstoff. |

Bevorzugte Verbindungen der Formel II sind in der folgenden Tabelle 2 zusammengestellt.

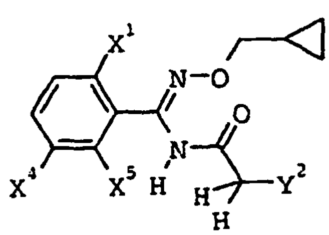

II.1

| Nr. | $X^1$ | $X^4$ | $X^5$ | $Y^2$ |
|---|---|---|---|---|
| II-1 | Cl | H | F | Ph |

(fortgesetzt)

| Nr. | $X^1$ | $X^4$ | $X^5$ | $Y^2$ |
|---|---|---|---|---|
| II-2 | Cl | H | F | Ph-2-F |
| II-3 | Cl | H | F | Ph-2,4-$F_2$ |
| II-4 | Cl | H | F | Ph-2-F-3-Me |
| II-5 | Cl | H | F | Ph-2-F-4-OMe |
| II-6 | Cl | H | F | Ph-3,5-$Me_2$ |
| II-7 | Cl | H | F | 3-Methyl-pyrazol-1-yl |
| II-8 | Cl | H | F | 3-Methyl-2-thienyl |
| II-9 | Cl | H | F | 2-Thienyl |
| II-10 | Cl | H | Cl | Ph |
| II-11 | Cl | H | Cl | Ph-2,4-$F_2$ |
| II-12 | Cl | H | $CF_3$ | 2-Thienyl |
| II-13 | Cl | H | $CF_3$ | Ph-4-Me |
| II-14 | Cl | H | $CF_3$ | Ph-4-OMe |
| II-15 | Cl | H | $CF_3$ | Ph |
| II-16 | $OCHF_2$ | H | F | Ph |
| II-17 | $OCHF_2$ | H | F | Ph-2-F |
| II-18 | $OCHF_2$ | H | F | Ph-4-F |
| II-19 | $OCHF_2$ | H | F | Ph-4-$CF_3$ |
| II-20 | $OCHF_2$ | H | F | Ph-4-OMe |
| II-21 | $OCHF_2$ | H | F | Ph-4-Me |
| II-22 | $OCHF_2$ | H | F | 3-Methyl-pyrazol-1-yl |
| II-23 | $OCHF_2$ | H | F | 3-Methyl-2-thienyl |
| II-24 | $OCHF_2$ | H | F | 2-Thienyl |
| II-25 | $OCHF_2$ | H | Cl | Ph |
| II-26 | $OCHF_2$ | H | Cl | Ph-2,4-$F_2$ |
| II-27 | $OCHF_2$ | H | $CF_3$ | 2-Thienyl |
| II-28 | $OCHF_2$ | H | $CF_3$ | Ph-4-Me |
| II-29 | $OCHF_2$ | H | $CF_3$ | Ph-4-OMe |
| II-30 | $OCHF_2$ | H | $CF_3$ | Ph |
| II-31 | $OCHF_2$ | H | $OCHF_2$ | Ph-4-OMe |
| II-32 | $OCHF_2$ | H | $OCHF_2$ | Ph |
| II-33 | $OCHF_2$ | H | $OCHF_2$ | Ph-4-Me |
| II-34 | $OCHF_2$ | H | $OCHF_2$ | Ph-4-Cl |
| II-35 | $CF_3$ | H | F | Ph |
| II-36 | $CF_3$ | H | F | Ph-2-F |
| II-37 | $CF_3$ | H | F | Ph-4-F |
| II-38 | $CF_3$ | H | F | Ph-4-Me |
| II-39 | $CF_3$ | H | F | Ph-4-OMe |

(fortgesetzt)

| Nr. | $X^1$ | $X^4$ | $X^5$ | $Y^2$ |
|---|---|---|---|---|
| II-40 | $CF_3$ | H | F | Ph-4-$CF_3$ |
| II-41 | $CF_3$ | H | F | 3-Methyl-pyrazol-1-yl |
| II-42 | $CF_3$ | H | F | 3-Methyl-2-thienyl |
| II-43 | $CF_3$ | H | F | 2-Thienyl |
| II-44 | $CF_3$ | H | Cl | Ph |
| II-45 | $CF_3$ | H | Cl | Ph-2,4-$F_2$ |
| II-46 | $CF_3$ | H | $CF_3$ | 2-Thienyl |
| II-47 | $CF_3$ | H | $CF_3$ | Ph-4-Me |
| II-48 | $CF_3$ | H | $CF_3$ | Ph-4-OMe |
| II-49 | $CF_3$ | H | $CF_3$ | Ph |
| II-50 | $CF_3$ | H | $OCHF_2$ | Ph-4-OMe |
| II-51 | $CF_3$ | H | $OCHF_2$ | Ph |
| II-52 | $CF_3$ | H | $OCHF_2$ | Ph-4-Me |
| II-53 | $CF_3$ | H | $OCHF_2$ | Ph-4-Cl |
| II-54 | $CF_3$ | Cl | F | 2-Thienyl |
| II-55 | $CF_3$ | Cl | F | Ph-2-F |
| II-56 | $CF_3$ | Cl | F | Ph |
| II-57 | $CF_3$ | Cl | F | Ph-2-F-5-Me |
| II-58 | $CF_3$ | Cl | Cl | Ph-3,5-Me |
| II-59 | $OCHF_2$ | F | F | Ph |
| II-60 | $OCHF_2$ | F | F | 3-Methyl-pyrazol-1-yl |
| II-61 | $OCHF_2$ | F | F | 3-Methyl-2-thienyl |
| II-62 | $OCHF_2$ | F | F | Ph-4-Me |
| II-63 | $OCHF_2$ | F | F | Ph-2-F-4-OMe |
| II-64 | $OCHF_2$ | F | F | Ph-2-F-5-Me |
| II-65 | $OCHF_2$ | F | F | Ph-4-F |
| II-66 | $OCHF_2$ | F | F | Ph-4-$CF_3$ |
| II-67 | $OCHF_2$ | F | F | Ph-4-OMe |
| II-68 | $OCHF_2$ | F | F | Ph-4-Cl |
| II-69 | $CF_3$ | F | F | Ph |
| II-70 | $CF_3$ | F | F | 3-Methyl-pyrazol-1-yl |
| II-71 | $CF_3$ | F | F | 3-Methyl-2-thienyl |
| II-72 | $CF_3$ | F | F | Ph-4-Me |
| II-73 | $CF_3$ | F | F | Ph-2-F-4-OMe |
| II-74 | $CF_3$ | F | F | Ph-2-F-5-Me |
| II-75 | $CF_3$ | F | F | Ph-4-F |
| II-76 | $CF_3$ | F | F | Ph-4-$CF_3$ |
| II-77 | $CF_3$ | F | F | Ph-4-OMe |

(fortgesetzt)

| Nr. | $X^1$ | $X^4$ | $X^5$ | $Y^2$ |
|---|---|---|---|---|
| II-78 | $CF_3$ | F | F | Ph-4-Cl |

Bevorzugt sind fungizide Mischungen die als Komponente a) eine der Verbindungen: I-33, I-35, I-42, I-44, I-46, I-60, oder vorzugsweise I-18, I-28, I-37, und als Komponente b) eine der Verbindungen: II-15, II-32, II-62, II-68 oder vorzugsweise II-59, II-69 enthalten.

Das Mengenverhältnis der Verbindungen I und II kann in weiten Bereichen variiert werden; vorzugsweise werden die Wirkstoffe in einem Gewichtsverhältnis im Bereich von 100:1 bis 0,1:1, bevorzugt 50:1 bis 1:1 und insbesondere bevorzugt 20:1 bis 1:1 eingesetzt.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Aufwandmengen der erfindungsgemäßen Mischungen liegen, vor allem bei landwirtschaftlichen Kulturflächen, je nach Art des gewünschten Effekts bei 0,01 bis 10 kg/ha, vorzugsweise 0,1 bis 5 kg/ha, insbesondere 0,2 bis 3,0 kg/ha.

Die Aufwandmengen liegen dabei für die Verbindungen I bei 0,005 bis 6,0 kg/ha, vorzugsweise 0,08 bis 3,0 kg/ha, insbesondere 0,12 bis 2,0 kg/ha.

Die Aufwandmengen für die Verbindungen II liegen entsprechend bei 0,005 bis 4,0 kg/ha, vorzugsweise 0,02 bis 2,0 kg/ha, insbesondere 0,08 bis 1,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln,

wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen läßt sich durch die folgenden Versuche zeigen:

Die Wirkstoffe werden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Der Wirkungsgrad (W) wird nach der Formel von Abbot wie folgt bestimmt:

$$W = (1 - \alpha) \cdot 100/\beta$$

$\alpha$ entspricht dem Pilzbefall der behandelten Pflanzen in % und
$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel: E = x + y - x·y/100

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b.

Anwendungsbeispiel 1: Protektive Wirksamkeit gegen den durch *Sphaerotheca fuliginea* verursachten Gurkenmehltau

Blätter von in Töpfen gewachsenen Gurkenkeimlingen der Sorte "Chinesische Schlange" wurden im Keimblattstadium mit wäßriger Wirkstoffaufbereitung, die aus einer Stammlösung bestehend aus 10 % Wirkstoff, 85 % Cyclohexanon und 5 % Emulgiermittel angesetzt wurde, bis zur Tropfnässe besprüht. 20 Stunden nach dem Antrocknen des Spritzbelages wurden die Pflanzen mit einer wäßrigen Sporensuspension des Gurkenmehltaus (*Sphaerotheca fuliginea*) inokuliert. Anschließend wurden die Pflanzen im Gewächshaus bei Temperaturen zwischen 20 und 24° C und 60 bis 80 % relativer Luftfeuchtigkeit für 7 Tage kultiviert. Dann wurde das Ausmaß der Mehltauentwicklung visuell in %-Befall der Keimblattfläche ermittelt.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Tabelle A

| Wirkstoff | Wirkstoffkonzentration in der Spritzbrühe in ppm | Wirkungsgrad in % der unbehandelten Kon- trolle |
|---|---|---|
| Kontrolle (unbehandelt) | (83 % Befall) | 0 |
| Verbindung I-28 | 0,125 | 52 |
| | 0,06 | 3 |
| Verbindung I-37 | 0,25 | 3 |
| | 0.125 | 3 |
| | 0,06 | 3 |
| Verbindung II-59 | 0,025 | 82 |
| | 0,0125 | 70 |
| | 0,006 | 58 |

Tabelle B

| erfindungsgemäße Kombinationen | beobachteter Wirkungsgrad | Berechneter Wirkungs- grad*) |
|---|---|---|
| Verbindung I-28 + Verbindung II-59 0,125 + 0,0125 ppm Mischung 10 : 1 | 100 | 85 |
| Verbindung I-28 + Verbindung II-59 0,06 + 0,006 ppm Mischung 10 : 1 | 99 | 59 |
| Verbindung I-28 + Verbindung II-59 0,06 + 0,0125 ppm Mischung 4,8 : 1 | 94 | 71 |
| Verbindung I-28 + Verbindung II-59 0,06 + 0,025 ppm Mischung 2,4 : 1 | 96 | 71 |

*) berechnet nach der Colby-Formel

Tabelle B (fortgesetzt)

| erfindungsgemäße Kombinationen | beobachteter Wirkungsgrad | Berechneter Wirkungs- grad*) |
|---|---|---|
| Verbindung I-28 + Verbindung II-59 0,125 + 0,006 ppm Mischung 21 :1 | 100 | 80 |
| Verbindung I-37 + Verbindung II-59 0,125 + 0,0125 ppm Mischung 10 : 1 | 96 | 71 |
| Verbindung I-37 + Verbindung II-59 0,06 + 0,006 ppm Mischung 10 : 1 | 100 | 59 |
| Verbindung I-37 + Verbindung II-59 0,06 + 0,0125 ppm Mischung 4,8 :1 | 100 | 71 |
| Verbindung I-37 + Verbindung II-59 0,06 + 0,025 ppm Mischung 2,4 : 1 | 100 | 71 |
| Verbindung I-37 + Verbindung II-59 0,125 + 0,006 ppm Mischung 21 : 1 | 100 | 59 |
| Verbindung I-37 + Verbindung II-59 0,25 + 0,006 ppm Mischung 42:1 | 100 | 59 |

*) berechnet nach der Colby-Formel

Aus den Ergebnissen des Versuches geht hervor, daß der beobachtete Wirkungsgrad in allen Mischungsverhältnissen höher ist, als der nach der Colby-Formel vorausberechnete Wirkungsgrad (aus Synerg 166A. XLS).

## Patentansprüche

**1.** Fungizide Mischungen, enthaltend

a) Benzophenone der Formel I,

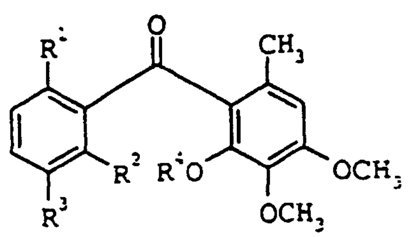

I

in der

$R^1$ für Chlor, Methyl, Methoxy, Acetoxy, Pivaloyloxy oder Hydroxy;

$R^2$ für Chlor oder Methyl;

$R^3$ für Wasserstoff, Halogen oder Methyl; und

$R^4$ für $C_1$-$C_6$-Alkyl oder Benzyl stehen, wobei der Phenylteil des Benzylrestes einen Halogen oder Methylsubstituenten tragen kann, und

b) Oximetherderivate der Formel II,

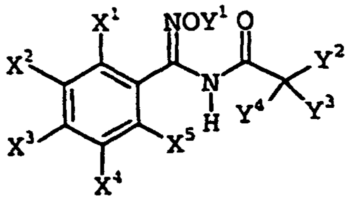

II

wobei die Substituenten $X^1$ bis $X^5$ und $Y^1$ bis $Y^4$ folgende Bedeutung haben:

$X^1$ Halogen, $C_1$-$C_4$-Halogenalkyl oder $C_1$-$C_4$-Halogenalkoxy;

$X^2$ bis $X^5$ unabhängig voneinander Wasserstoff, Halogen, $C_1$-$C_4$-Alkyl, $C_1$-$C_4$-Halogenalkyl, $C_1$-$C_4$-Alkoxy oder $C_1$-$C_4$-Halogenalkoxy;

$Y^1$ $C_1$-$C_4$-Alkyl, $C_2$-$C_6$-Alkenyl, $C_2$-$C_6$-Alkinyl, $C_1$-$C_4$-Alkyl-$C_3$-$C_7$-cycloalkyl, wobei diese Reste Substituenten ausgewählt aus der Gruppe Halogen, Cyano, und $C_1$-$C_4$-Alkoxy tragen können;

$Y^2$ einen Phenylrest oder einen 5- oder 6-gliedrigen gesättigten oder ungesättigten Heterocyclylrest mit mindestens einem Heteroatom ausgewählt aus der Gruppe N, O und S, wobei die cyclischen Reste einen bis drei Substituenten ausgewählt aus der Gruppe aus Halogen, $C_1$-$C_4$-Alkyl, $C_1$-$C_4$-Alkoxy, $C_1$-$C_4$-Halogenalkyl, $C_1$-$C_4$-Halogenalkoxy, $C_1$-$C_4$-Alkoxy-$C_2$-$C_4$-alkenyl, $C_1$-$C_4$-Alkoxy-$C_2$-$C_4$-alkinyl aufweisen können;

$Y^3$, $Y^4$ unabhängig voneinander Wasserstoff, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy;

in einer synergistisch wirksamen Menge.

**2.** Fungizide Mischungen nach Anspruch 1, wobei in Formel I

$R^1$ für Methoxy, Acetoxy oder Hydroxy;
$R^2$ für Methyl;
$R^3$ für Wasserstoff, Chlor oder Brom; und
$R^4$ für $C_1$-$C_4$-Alkyl steht.

**3.** Fungizide Mischung nach Anspruch 1, **dadurch gekennzeichnet, daß** das Gewichtsverhältnis der Benzophenone I zu den Oximetherderivaten der Formel II 50:1 bis 1:1 beträgt.

**4.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit Benzophenonen der Formel I gemäß Anspruch 1 und Oximetherderivaten der Formel II gemäß Anspruch 1 behandelt.

**5.** Verfahren nach Anspruch 4, **dadurch gekennzeichnet, daß** man Benzophenone der Formel I gemäß Anspruch 1 und Oximetherderivate der Formel II gemäß Anspruch 1 gleichzeitig, und zwar gemeinsam oder getrennt, oder nacheinander ausbringt.

**6.** Verfahren nach Anspruch 4 oder 5, **dadurch gekennzeichnet, daß** man die Benzophenone der Formel I gemäß Anspruch 1 in einer Menge von 0,08 bis 3,0 kg/ha aufwendet.

**7.** Verfahren nach den Ansprüchen 4 bis 6, **dadurch gekennzeichnet, daß** man die Oximetherderivate der Formel II gemäß Anspruch 1 in einer Menge von 0,02 bis 2,0 kg/ha aufwendet.

**8.** Fungizides Mittel, das in zwei Teilen konditioniert ist, wobei der eine Teil Benzophenone der Formel I gemäß Anspruch 1 in einem festen oder flüssigen Träger enthält und der andere Teil Oximetherderivate der Formel II gemäß Anspruch 1 in einem festen oder flüssigen Träger enthält.

## Claims

**1.** A fungicidal mixture, comprising

a) benzophenones of the formula I

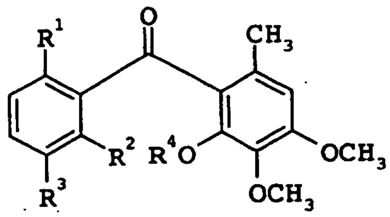

I

in which

$R^1$ is chlorine, methyl, methoxy, acetoxy, pivaloyloxy or hydroxyl;

$R^2$ is chlorine or methyl;

$R^3$ is hydrogen, halogen or methyl; and

$R^4$ is $C_1$-$C_6$-alkyl or benzyl, where the phenyl moiety of the benzyl radical may carry a halogen or methyl substituent, and

b) oxime ether derivatives of the formula II

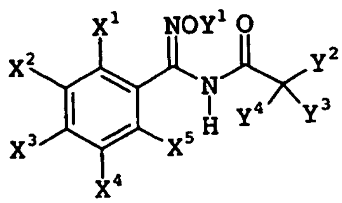

II

where the substituents $X^1$ to $X^5$ and $Y^1$ to $Y^4$ are as defined below:

$X^1$ is halogen, $C_1$-$C_4$-haloalkyl or $C_1$-$C_4$-haloalkoxy;

$X^2$ to $X^5$ independently of one another are hydrogen, halogen, $C_1$-$C_4$-alkyl, $C_1$-$C_4$-haloalkyl, $C_1$-$C_4$-alkoxy or $C_1$-$C_4$-haloalkoxy;

$Y^1$ is $C_1$-$C_4$-alkyl, $C_2$-$C_6$-alkenyl, $C_2$-$C_6$-alkynyl, $C_1$-$C_4$-alkyl-$C_3$-$C_7$-cycloalkyl, where these radicals may carry substituents selected from the group consisting of halogen, cyano and $C_1$-$C_4$-alkoxy;

$Y^2$ is a phenyl radical or a 5- or 6-membered saturated or unsaturated heterocyclyl radical having at least one heteroatom selected from the group consisting of N, O and S, where the cyclic radicals may have one to three substituents selected from the group consisting of halogen, $C_1$-$C_4$-alkyl, $C_1$-$C_4$-alkoxy, $C_1$-$C_4$-haloalkyl, $C_1$-$C_4$-haloalkoxy, $C_1$-$C_4$-alkoxy-$C_2$-$C_4$-alkenyl, $C_1$-$C_4$-alkoxy-$C_2$-$C_4$-alkynyl;

$Y^3$, $Y^4$ independently of one another are hydrogen, $C_1$-$C_4$-alkyl, $C_1$-$C_4$-alkoxy, $C_1$-$C_4$-alkylthio, N-$C_1$-$C_4$-alkylamino, $C_1$-$C_4$-haloalkyl or $C_1$-$C_4$-haloalkoxy;

in a synergistically effective amount.

**2.** A fungicidal mixture as claimed in claim 1, where in formula I

$R^1$ is methoxy, acetoxy or hydroxyl;
$R^2$ is methyl;
$R^3$ is hydrogen, chlorine or bromine; and
$R^4$ is $C_1$-$C_4$-alkyl.

**3.** A fungicidal mixture as claimed in claim 1, wherein the weight ratio of the benzophenones I to the oxime ether derivatives of the formula II is from 50:1 to 1:1.

**4.** A method for controlling harmful fungi, which comprises treating the harmful fungi, their habitat or the plants, seeds, soils, areas, materials or spaces to be kept free from them with benzophenones of the formula I as set forth in claim 1 and oxime ether derivatives of the formula II as set forth in claim 1.

**5.** A method as claimed in claim 4, wherein benzophenones of the formula I as set forth in claim 1 and oxime ether derivatives of the formula II as set forth in claim 1 are applied simultaneously, that is either together or separately, or successively.

**6.** A method as claimed in claim 4 or 5, wherein the benzophenones of the formula I as set forth in claim 1 are applied in an amount of from 0.08 to 3.0 kg/ha.

**7.** A method as claimed in any of claims 4 to 6, wherein the oxime ether derivatives of the formula II as set forth in claim 1 are applied in an amount of from 0.02 to 2.0 kg/ha.

**8.** A fungicidal composition, which is conditioned in two parts, one part comprising benzophenones of the formula I as set forth in claim 1 in a solid or liquid carrier and the other part comprising oxime ether derivatives of the formula II as set forth in claim 1 in a solid or liquid carrier.

## Revendications

**1.** Mélanges fongicides, contenant

a) des benzophénones de la formule I,

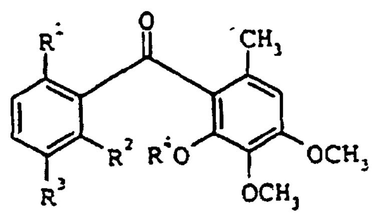

I

dans laquelle

$R^1$ représente du chlore ou un groupe méthyle, méthoxy, acétoxy, pivaloyloxy ou hydroxy,
$R^2$ représente du chlore ou du méthyle,
$R^3$ représente de l'hydrogène, un halogène ou du méthyle, et
$R^4$ représente un groupe alkyle en $C_1$-$C_6$ ou benzyle, la partie phényle du radical benzyle pouvant porter un halogène ou des substituants méthyle, et

b) des dérivés d'éther d'oxime de la formule II,

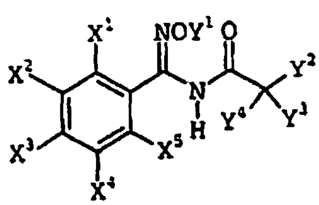

II

dans laquelle les substituants $X^1$ à $X^5$ et $Y^1$ à $Y^4$ ont la signification suivante :

$X^1$ est de l'halogène, un groupe halogénoalkyle en $C_1$-$C_4$ ou halogénoalcoxy en $C_1$-$C_4$,
$X^2$ à $X^5$ représentent, indépendamment les uns des autres, de l'hydrogène, un halogène, un groupe alkyle en $C_1$-$C_4$, halogénoalkyle en $C_1$-$C_4$, alcoxy en $C_1$-$C_4$, ou halogénoalcoxy en $C_1$-$C_4$,
$Y^1$ représente un groupe alkyle en $C_1$-$C_4$, alcényle en $C_2$-$C_6$, alcynyle en $C_2$-$C_6$, $C_1$-$C_4$-alkyle-$C_3$-$C_7$-cycloalkyle, ces radicaux pouvant porter des substituants choisis parmi le groupe constitué d'halogène, de cyano et d'alcoxy en $C_1$-$C_4$,
$Y^2$ représente un radical phényle ou un radical hétérocyclyle pentagonal ou hexagonal, saturé ou insaturé, comportant au moins un hétéroatome choisi parmi le groupe N, O et S, les radicaux cycliques pouvant présenter 1 à 3 substituants choisis parmi le groupe constitué d'halogène et de radicaux alkyle en $C_1$-$C_4$, alcoxy en $C_1$-$C_4$, halogènoalkyle en $C_1$-$C_4$, halogénoalcoxy en $C_1$-$C_4$, $C_1$-$C_4$-alcoxy-$C_2$-$C_4$-alcényle, $C_1$-$C_4$-alcoxy-$C_2$-$C_4$-alcynyle,
$Y^3$, $Y^4$ représentent, indépendamment l'un de l'autre, de l'hydrogène ou un groupe alkyle en $C_1$-$C_4$, alcoxy en $C_1$-$C_4$, alkylthio en $C_1$-$C_4$, N-alkylamino en $C_1$-$C_4$, halogénoalkyle en $C_1$-$C_4$, ou halogénoalcoxy en $C_1$-$C_4$,

en une quantité efficace du point de vue synergique.

**2.** Mélanges fongicides suivant la revendication 1, dans lesquels, dans la formule I,

$R^1$ représente un groupe méthoxy, acétoxy ou hydroxy,
$R^2$ est du méthyle,
$R^3$ est de l'hydrogène, du chlore ou du brome, et
$R^4$ est un groupe alkyle en $C_1$-$C_4$.

**3.** Mélange fongicide suivant la revendication 1 **caractérisé en ce que** le rapport pondéral entre les benzophénone I et les dérivés d'éther d'oxime de la formule II est de 50/1 à 1/1.

**4.** Procédé pour lutter contre des champignons nuisibles, **caractérisé en ce qu'**on traite les champignons nuisibles, leur biotope ou les plantes, semences, sols, surfaces, matériels ou espaces devant en être épargnés avec des benzophénones de la formule I suivant la revendication 1 et des dérivés d'éther d'oxime de la formule II suivant la revendication 1.

**5.** Procédé suivant la revendication 4, **caractérisé en ce qu'**on répand des benzophénones de la formule I suivant la revendication 1 et des dérivés d'éther d'oxime de la formule II suivant la revendication 1 simultanément, et ce conjointement ou séparément, ou successivement.

**6.** Procédé suivant la revendication 4 ou 5, **caractérisé en ce qu'**on applique les benzophénones de la formule I suivant la revendication 1 en une quantité de 0,08 à 3,0 kg/ha.

**7.** Procédé suivant les revendications 4 à 6, **caractérisé en ce qu'**on applique les dérivés d'éther d'oxime de la formule II suivant la revendication 1, en une quantité de 0,02 à 2,0 kg/ha.

**8.** Produit fongicide qui est conditionné en 2 parties, une partie contenant des benzophénones de la formule I suivant la revendication 1 dans un support solide ou liquide et l'autre partie contenant des dérivés d'éther d'oxime de la formule II suivant la revendication 1 dans un support solide ou liquide.